# FASCICULE DE BREVET EUROPEEN

(11) **EP 1 265 012 B1**
(45) Date de publication et mention de la délivrance du brevet: **17.08.2005**
(21) Numéro de dépôt: 02356100.4
(22) Date de dépôt: 04.06.2002
(51) Int. Cl.: F16K 24/04

(54) **Vanne de désaérage pour canalisations de liquide**
Entlüftungsventil für eine Wasserleitung
Venting valve for conduits for fluid

(30) Priorité: 05.06.2001 FR 0107426
(43) Date de publication de la demande: 11.12.2002
(73) Titulaire: Bayard, 69881 Meyzieu Cedex (FR)
(72) Inventeur: Colin, Christian Maurice Jean Lucien, 01390 Mionnay (FR); Bondivenne, Guy Charles Alfred, 38080 Saint Alban de Roche (FR)
(74) Mandataire: Martin, Didier Roland Valéry

(56) Documents cités:
- FR-A- 2 568 346
- US-A- 4 579 140
- US-A- 4 586 528
- US-A- 5 579 802
- PATENT ABSTRACTS OF JAPAN vol. 006, no. 026 (M-112), 16 février 1982 (1982-02-16) & JP 56 143878 A (AKETO YASUO), 9 novembre 1981 (1981-11-09)

## Description

La présente invention se rapporte au domaine technique général des vannes d'aérage multifonctions destinées à assurer l'évacuation de l'air dans des conduites formant les réseaux d'alimentation et de distribution des liquides, et en particulier d'eau.

La présente invention concerne une vanne de désaérage pour canalisations de liquide comportant un élément d'obturation monté dans une chambre de flottaison reliée à l'extérieur par au moins un orifice d'échappement d'air, ledit élément d'obturation étant susceptible d'occuper par flottaison, selon le niveau du liquide dans la chambre et/ou selon les différents débits d'air susceptibles de régner dans la chambre, une position basse dans laquelle l'air s'échappe par le (les) orifice(s) d'échappement et une position haute dans laquelle il ferme de manière étanche le (les) orifice(s) d'échappement.

Il est déjà connu d'avoir recours dans les réseaux de distribution d'eau à des vannes d'aérage pour assurer l'évacuation de l'air dans les conduites d'eau. Les réseaux de distribution d'eau sont généralement constitués d'une série de conduites ou canalisations de diamètres extrêmement variés, le réseau débutant par une canalisation principale de fort diamètre, à partir de laquelle sont dérivées plusieurs canalisations secondaires de diamètres inférieurs, ces dernières canalisations pouvant également être suivies de canalisations diverses de diamètres encore inférieurs.

La grande variété de diamètres de canalisations, ainsi que les diverses opérations liées au fonctionnement des réseaux, telles les opérations de vidange, de séparation ou de réglage, sont à l'origine de conditions de débit d'eau et d'air extrêmement variées, de telle sorte que les conditions de pression et de mise en dépression des canalisations sont extrêmement variables.

Les vannes connues sont ainsi susceptibles d'assurer un désaérage dit à grand débit, pour permettre l'évacuation de l'air des conduites lors de leur remplissage. Les vannes connues permettent également d'assurer un aérage de la canalisation lorsque de l'air à grand débit est introduit en cas de vidange volontaire ou accidentelle dans les conduites. Enfin, les vannes connues permettent également d'assurer un dégazage lent des conduites sous pression par un ajutage de faible diamètre afin d'assurer l'évacuation des gaz qui s'accumulent au point haut des réseaux et créent des pertes de charge.

Les vannes d'aérage connues combinent généralement les trois fonctions mentionnées ci-dessus, et leur difficulté de conception réside dans l'antagonisme existant dans la nécessité de fermer la vanne lorsque l'eau arrive pour interrompre la fonction de désaérage, sans pour autant fermer cette fonction de désaérage en simples conditions aléatoires momentanées et transitoires, liées par exemple à de forts débits d'air. Cette maîtrise du réglage de la vanne est difficile à réaliser et nécessite un compromis de performance délicat à trouver.

Par ailleurs, il s'avère que les compromis recherchés peuvent être différents selon les points du réseau d'eau où se trouve la vanne d'aérage. En effet, on comprend que sur la canalisation principale de fort diamètre, on recherchera plutôt un débit maximum d'évacuation d'air, alors que sur des canalisations de plus faibles diamètres, des vitesses de remplissage trop élevées peuvent s'établir au risque de créer de violents coups de bélier. On souhaitera dans ce cas que l'aérage se ferme si le débit d'air dépasse le seuil maximum acceptable.

De manière pratique, il est ainsi déjà connu d'avoir recours à des vannes de désaérage multifonctions pour canalisations de liquide comportant un élément d'obturation en forme de disque annulaire monté dans une chambre de flottaison, qui est reliée à l'extérieur par au moins un orifice d'échappement d'air de forme partiellement annulaire correspondante. Le disque annulaire est susceptible d'occuper par flottaison, selon le niveau du liquide dans la chambre et également selon les différents débits d'air régnant dans la chambre, une position basse dans laquelle l'air est susceptible de s'échapper par l'orifice d'échappement, et une position haute dans laquelle le disque annulaire vient fermer de manière étanche ledit orifice d'échappement. De manière connue, le disque annulaire est associé à une sphère ou boule de dégazage assurant, par coopération avec un second orifice d'échappement de diamètre plus faible, un dégazage lent de la canalisation.

En règle générale, on considère qu'il existe un rapport de débit possible entre les orifices importants d'évacuation et les très petits orifices d'évacuation d'air, qui est de l'ordre de 1 à 1000.

Les vannes de désaérage connues et fonctionnant selon ce principe donnent généralement satisfaction, mais souffrent d'une maîtrise insuffisante de leur déclenchement. En effet, il a pu être constaté qu'en cas notamment de variation aléatoire de débits d'air, les vannes connues avaient tendance à se fermer de manière trop rapide, ce qui nuisait à un dégazage approprié alors même que l'arrivée d'eau n'était pas encore réalisée.

Les objets assignés à l'invention visent en conséquence à porter remède aux différents inconvénients énumérés précédemment, et à proposer une nouvelle vanne de désaérage pour canalisations de liquide permettant une maîtrise améliorée de ses conditions de déclenchement.

Un autre objet de l'invention vise à proposer une nouvelle vanne de désaérage présentant une grande souplesse d'utilisation et dont les caractéristiques de déclenchement peuvent être facilement modifiées.

Un autre objet de l'invention vise à proposer une nouvelle vanne de désaérage de fabrication particulièrement simplifiée et de fonctionnement fiable et sûr.

Les objets assignés à l'invention sont atteints à l'aide d'une vanne de désaérage pour canalisations de liquide comportant un élément d'obturation monté dans une chambre de flottaison reliée à l'extérieur par au moins un orifice d'échappement d'air, ledit élément d'obturation définissant une face d'obturation et étant susceptible d'occuper par flottaison, selon le niveau du liquide dans la chambre et/ou selon les différents débits d'air, une position basse dans laquelle l'air s'échappe par le (les) orifice(s) d'échappement et une position haute dans laquelle il ferme de manière étanche le (les) orifice(s) d'échappement par sa face d'obturation, caractérisée en ce que l'élément d'obturation présente au moins une zone concave ménagée dans sa face d'obturation, destinée à venir fermer le (les) orifice(s) d'échappement.

D'autres avantages et objets de l'invention seront explicités plus en détails à la lecture de la description qui suit, et à l'aide des dessins annexés fournis à titre purement explicatif et non limitatif, dans lesquels :
- La figure 1 illustre un schéma général simplifié d'un réseau de distribution d'eau mettant en oeuvre des canalisations de diamètres différents.
- La figure 2 illustre, selon une vue en coupe transversale, une variante préférentielle d'une vanne de désaérage conforme à l'invention.
- Les figures 3 et 4 illustrent, selon une vue de dessus, deux variantes de réalisation d'un élément d'obturation conforme à l'invention.

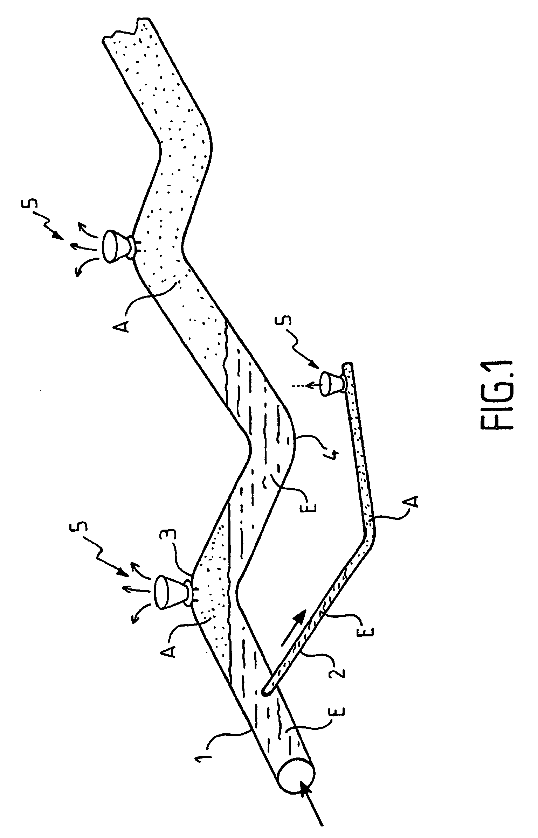

Sur la figure 1, on a représenté de manière schématique, un exemple d'un réseau de distribution de liquide, en l'occurrence d'eau, formé de manière classique par une série de conduites comprenant par exemple des canalisations primaires 1 de fort diamètre, à partir desquelles est dérivée en différents points une seconde série de canalisations secondaires 2 de diamètres inférieurs, à partir desquelles peuvent être dérivées d'autres séries de canalisations, par exemple tertiaires, de diamètres inférieurs (non représentées aux figures).

Les canalisations 1, 2 doivent s'adapter aux différentes configurations rencontrées et présentent à ce titre des points hauts 3 et des points bas 4, ainsi que de nombreux coudes et changements de direction.

Ainsi, lors de leur remplissage et de leur vidange volontaire ou accidentelle, on observe une accumulation d'air (A) au point haut des canalisations 1, 2, alors que dans le reste des canalisations l'eau (E) est présente.

C'est la raison pour laquelle on prévoit de monter des vannes de désaérage 5 au point haut 3 pour assurer l'évacuation de l'air des canalisations 1, 2.

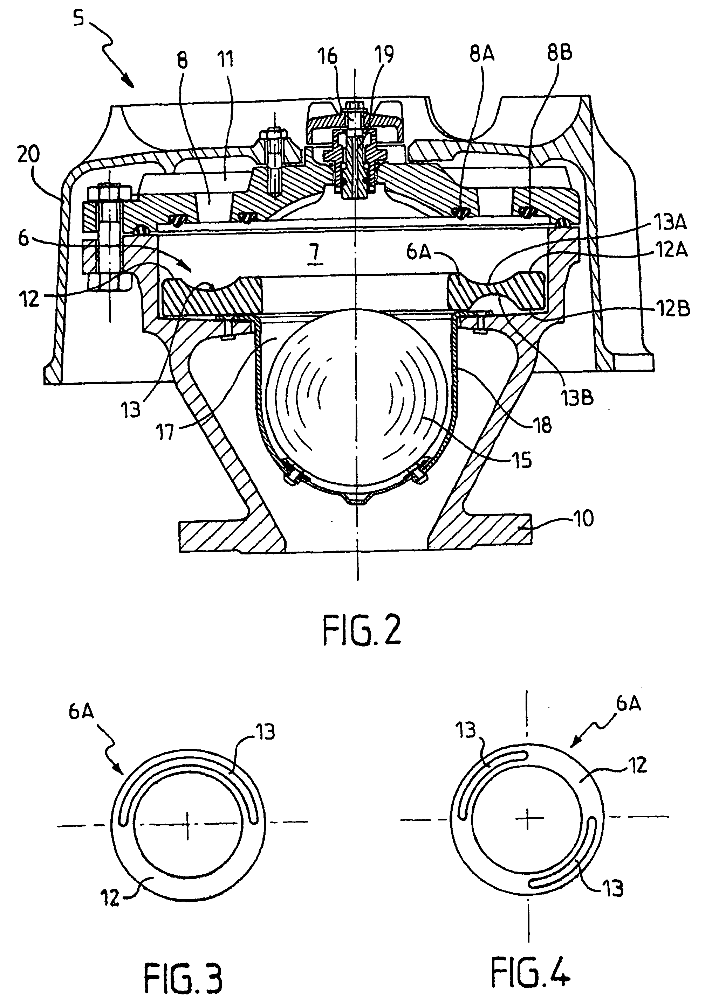

Selon l'invention, tel qu'illustré à la figure 2 notamment, la vanne de désaérage 5 comporte un élément d'obturation 6 monté dans une chambre de flottaison 7 reliée à l'extérieur de ladite vanne, c'est-à-dire à la pression atmosphérique, par au moins un orifice 8 d'échappement d'air.

La chambre de flottaison 7 est formée par une cavité ouverte ménagée dans un corps principal 10, ladite cavité ouverte étant fermée à sa partie supérieure par une plaque de fermeture 11, par exemple par vissage, dans laquelle est (sont) ménagé(s) un ou plusieurs orifice(s) 8 d'échappement d'air. L'élément d'obturation 6 définit une face d'obturation 12 et est susceptible d'occuper par flottaison, selon le niveau du liquide dans la chambre de flottaison 7 et/ou selon les différents débits d'air provenant des canalisations 1, 2, une position basse telle que montrée à la figure 2, dans laquelle l'air s'échappe par le (les) orifice(s) d'échappement d'air 8 et une position haute dans laquelle il ferme de manière étanche le (les) orifice(s) d'échappement d'air 8 par l'intermédiaire de sa face d'obturation 12.

Selon l'invention, l'élément d'obturation 6 présente au moins une zone concave 13 ménagée dans sa face d'obturation 12 destinée à venir fermer le (les) orifice(s) 8 d'échappement d'air.

Tel qu'illustré, en particulier à la figure 2, les orifices 8 d'échappement d'air sont pourvus autour de leur périphérie de joints d'étanchéité 8A, 8B, l'élément d'obturation 6 étant dimensionné et conformé de manière qu'en position de fermeture, la zone concave 13 soit située entre les deux lignes de joints 8A, 8B.

Il s'est ainsi avéré que grâce à la mise en place sur la face d'obturation 12 d'une zone concave 13 située sensiblement à l'aplomb du (des) orifice(s) 8 d'échappement d'air, on obtenait un déclenchement maîtrisé de la fermeture, le déclenchement étant particulièrement insensible aux variations aléatoires des débits d'air survenant dans la chambre de flottaison 7, variations qui traditionnellement avaient tendance à initier une fermeture précoce de l'élément d'obturation 6. Cet effet bénéfique peut être mis en relation avec la création de deux tourbillons d'air distincts et de faibles valeurs, l'un au niveau de la zone concave 13, l'autre dans la zone située entre l'élément d'obturation 6 et la plaque de fermeture 11. En raison de la création de deux tourbillons de vitesses relativement faibles, il s'avère que la dépression créée est alors suffisamment faible pour ne pas avoir tendance à soulever l'élément d'obturation 6, ce qui permet à la vanne de ne se fermer que par arrivée d'eau, ce qui autorise une très forte évacuation d'air.

Il s'est également avéré que le seuil de déclenchement ou de soulèvement de l'élément d'obturation était lié à la forme plus ou moins prononcée de la zone concave 13, de telle sorte qu'en faisant varier la profondeur ou configuration géométrique et en particulier le rayon de courbure de ladite zone concave 13, on pouvait obtenir des seuils de déclenchement d'obturation différents.

C'est ainsi qu'on a prévu de réaliser un élément d'obturation 6 présentant deux faces d'obturation opposées 12A, 12B, chacune étant respectivement pourvue de zones concaves 13A, 13B de rayons de courbure différents, de manière à définir des seuils d'obturation différents.

On comprend alors que plus le rayon de courbure est prononcé, plus la valeur de la dépression susceptible de soulever l'élément d'obturation sera faible, et plus le seuil de déclenchement sera donc retardé.

Grâce à la réalisation d'un élément d'obturation 6 présentant deux zones concaves 13 de concavités différentes, on obtient ainsi un moyen particulièrement simple de faire varier la sensibilité de fonctionnement d'une vanne d'aérage selon l'invention, puisqu'il suffit alors de changer la position de l'élément d'obturation 6 en regard de l'orifice 8 d'évacuation d'air concerné, en retournant simplement ledit élément d'obturation 6.

Selon une variante préférentielle de réalisation de l'invention telle qu'illustrée à la figure 2, l'élément d'obturation 6 est formé par un disque annulaire 6A reposant dans sa position de repos sur le fond de la chambre de flottaison 7. Selon cette configuration, la zone concave 13 est formée par une gorge s'étendant sur l'une ou l'autre, ou encore les deux faces du disque annulaire.

Selon la variante préférentielle de l'invention illustrée à la figure 2, la zone concave 13 s'étend sur la totalité de la circonférence du disque annulaire 6A et sur les deux faces dudit disque.

A titre de variante, tel qu'illustré à la figure 3, la zone concave 13 peut s'étendre sur une portion seulement de la circonférence du disque 6A, et par exemple simplement sur la moitié de la circonférence. Selon cette configuration, on peut donc obtenir un disque d'obturation présentant pour chacune de ses faces d'obturation deux seuils différents de déclenchement, la demi-partie du disque ne comportant pas de zone concave 13 ayant tendance à venir obturer le (les) orifice(s) 8 d'évacuation d'air correspondant(s), avant l'autre demi-partie du disque.

Les orifices 8 d'évacuation d'air ménagés dans l'épaisseur de la plaque de fermeture 11 peuvent se présenter sous la forme d'une série d'une ou de plusieurs lumières concentriques de forme circulaire, ou en arc de cercle par exemple.

Selon la variante de réalisation préférentielle illustrée à la figure 2, la vanne de désaérage 5 est associée à une sphère 15 de dégazage à base d'un matériau du genre caoutchouc, susceptible d'actionner un sous-ensemble de contrôle 16 monté sur la plaque de fermeture 11, pour assurer un dégazage des canalisations 1, 2 sous pression par l'intermédiaire d'un ajutage 19 de très petit diamètre.

Selon cette configuration, la vanne d'aérage 5 selon l'invention comprend de manière classique une chambre de flottaison additionnelle 17 reliée à la chambre de flottaison 7 et débouchant de manière centrale à sa partie inférieure. La chambre de flottaison additionnelle 17 comprend par exemple le panier de réception 18 de la sphère de dégazage 15 qui peut se déplacer librement sous l'effet de l'arrivée d'eau et passer à travers la partie centrale annulaire du disque 6A, de manière à pouvoir venir obturer l'ajutage central 19 dans sa position haute de butée, ledit ajutage 19 étant ménagé à travers le sous ensemble 16 et reliant l'intérieur de la vanne à l'extérieur.

Selon cette disposition et de manière classique, la sphère de dégazage 15 est donc montée mobile dans la chambre de flottaison additionnelle 17 et dans et à travers la zone libre centrale du disque annulaire 6A, de manière à pouvoir se déplacer verticalement entre sa position basse de repos et sa position haute dans laquelle elle obture l'ajutage de dégazage 19.

De manière complémentaire, la vanne de désaérage conforme à l'invention sera avantageusement pourvue d'une coiffe supérieure 20, fixée par exemple de manière amovible et par vissage sur la plaque de fermeture 11.

Bien évidemment, au sens de l'invention, la vanne de désaérage peut ne pas être pourvue d'une sphère de dégazage et être formée d'un seul dispositif de désaérage formé par le disque annulaire 6A.

En cours de fonctionnement, la chambre de flottaison 7 qui est reliée aux canalisations 1, 2, est soumise à une arrivée plus ou moins importante d'eau et/ou d'air créant des pressions plus ou moins importantes à l'intérieur de ladite chambre. En cas de débit d'air, le disque annulaire 6A sera soumis par sa face d'obturation 12 à une dépression qui aura tendance à attirer le disque 12 sensiblement verticalement vers et en direction de la plaque de fermeture 11. Grâce à la présence des zones concaves 13, la dépression créée sera moins importante en comparaison avec des disques annulaires classiques de l'art antérieur qui sont plans, de telle sorte que le disque annulaire 6A n'atteindra sa position haute d'étanchéité de manière retardée que lors d'une arrivée d'eau suffisante pour assurer, par la poussée d'Archimède, la fermeture étanche. Grâce à la maîtrise du déclenchement du disque annulaire 6A, on obtient ainsi une forte évacuation d'air et ce de manière prolongée en s'affranchissant de conditions aléatoires et transitoires.

Dans le cas où l'on souhaite augmenter ou réduire le seuil de déclenchement de l'obturation, il suffit, après avoir au préalable démonté la coiffe 20, puis la plaque de fermeture 11, de retourner le disque 12 pour changer la valeur de la dépression créée, par modification de la configuration géométrique de la zone concave 13 située en regard du (des) orifice(s) 8 d'évacuation d'air.

## Revendications

1. Vanne de désaérage (5) pour canalisations (1, 2) de liquide comportant un élément d'obturation (6) monté dans une chambre de flottaison (7) reliée à l'extérieur par au moins un orifice (8) d'échappement d'air, ledit élément d'obturation définissant une face d'obturation (12) et étant susceptible d'occuper par flottaison, selon le niveau du liquide dans la chambre (7) et/ou selon les différents débits d'air, une position basse dans laquelle l'air s'échappe par le (les) orifice(s) (8) d'échappement et une position haute dans laquelle il ferme de manière étanche le (les) orifice(s) (8) d'échappement par sa face d'obturation (12), **caractérisée en ce que** l'élément d'obturation (6) présente au moins une zone concave (13) ménagée dans sa face d'obturation (12) destinée à venir fermer le (les) orifice(s) (8) d'échappement.

2. Vanne selon la revendication 1 **caractérisée en ce que** l'élément d'obturation (6) présente deux faces d'obturation (12A, 12B) opposées, chacune étant pourvue de zones concaves (13A, 13B) de rayons de courbures différents de manière à définir des seuils d'obturation différents.

3. Vanne selon la revendication 1 ou 2 **caractérisée en ce que** l'élément d'obturation (6) est un disque annulaire (6A).

4. Vanne selon la revendication 3 **caractérisée en ce que** la zone concave (13) est formée par une gorge s'étendant sur l'une ou l'autre, ou sur les deux faces du disque annulaire (6A).

5. Vanne selon la revendication 4 **caractérisée en ce que** la gorge s'étend sur la totalité de la circonférence du disque annulaire.

6. Vanne selon la revendication 4 **caractérisée en ce que** la gorge s'étend sur une partie seulement de la circonférence.

7. Vanne selon l'une des revendications 1 à 3 **caractérisée en ce qu'**elle comporte une sphère de dégazage (15) montée mobile dans une chambre de flottaison additionnelle (17) et dans la zone libre centrale du disque annulaire, de manière à pouvoir se déplacer verticalement entre une position basse de repos et une position haute dans laquelle elle obture un ajutage de dégazage.

## Patentansprüche

1. Entlüftungsventil (5) für Flüssigkeitsleitungen (1, 2), umfassend ein Verschlusselement (6), das in einer Schwimmkammer (7) eingebaut ist, die mit der Außenseite über mindestens eine Luftablassöffnung (8) verbunden ist, wobei das Verschlusselement eine Verschlussseite (12) festlegt und schwimmend, je nach dem Flüssigkeitsstand in der Kammer (7) und/oder nach den verschiedenen Luftdurchsätzen eine untere Position, in der die Luft über die Ablassöffnung(en) (8) entweicht, und eine obere Position, in der es die Ablassöffnung(en) (8) mit seiner Verschlussseite (12) abdichtend verschließt, einnehmen kann, **dadurch gekennzeichnet, dass** das Verschlusselement (6) mindestens einen konkaven Bereich (13) aufweist, der in seiner Verschlussseite (12) angebracht ist, um die Ablassöffnung(en) (8) zu verschließen.

2. Ventil nach Anspruch 1, **dadurch gekennzeichnet, dass** das Verschlusselement (6) zwei gegenüberliegende. Verschlussseiten (12A, 12B) aufweist, wobei jede mit konkaven Bereichen (13A, 13B) versehen ist, deren Krümmungsradien unterschiedlich sind, um verschiedene Verschlussschwellen festzulegen.

3. Ventil nach Anspruch 1 oder 2, **dadurch gekennzeichnet, dass** das Verschlusselement (6) eine ringförmige Scheibe (6A) ist.

4. Ventil nach Anspruch 3, **dadurch gekennzeichnet, dass** der konkave Bereich (13) von einer Auskehlung gebildet wird, die sich auf der einen oder der anderen oder auf beiden Seiten der ringförmigen Scheibe (6A) erstreckt.

5. Ventil nach Anspruch 4, **dadurch gekennzeichnet, dass** sich die Auskehlung über den gesamten Umfang der ringförmigen Scheibe erstreckt.

6. Ventil nach Anspruch 4, **dadurch gekennzeichnet, dass** sich die Auskehlung nur über einen Teil des Umfangs erstreckt.

7. Ventil nach einem der Ansprüche 1 bis 3, **dadurch gekennzeichnet, dass** es eine Entgasungskugel (15) umfasst, die beweglich in einer zusätzlichen Schwimmkammer (17) und in dem freien Mittelbereich der ringförmigen Scheibe eingebaut ist, um sich senkrecht zwischen einer unteren Ruheposition und einer oberen Position, in der sie einen Entgasungsstutzen verschließt, bewegen zu können.

## Claims

1. De-airing valve (5) for pipes (1, 2) of liquid comprising a stopper element (6) mounted in a float chamber (7) connected to the outside by at least one air exhaust orifice (8), the said stopper element defining a stopper face (12) and being capable of occupying by flotation, according to the level of the liquid in the chamber (7) and/or according to the different air flows, a low position in which the air escapes via the exhaust orifice(s) (8) and a high position in which it closes in sealed manner the exhaust orifice(s) (8) via its stopper face (12), **characterized in that** the stopper element (6) has at least one concave zone (13) made in its stopper face (12) intended to come to close the exhaust orifice(s) (8).

2. Valve according to Claim 1, **characterized in that** the stopper element (6) has two opposite stopper faces (12A, 12B), each being provided with concave zones (13A, 13B) with different curvature radii so as to define different stopper thresholds.

3. Valve according to Claim 1 or 2, **characterized in that** the stopper element (6) is an annular disc (6A).

4. Valve according to Claim 3, **characterized in that** the concave zone (13) is formed by a groove extending on one or other face, or on both faces of the annular disc (6A).

5. Valve according to Claim 4, **characterized in that** the groove extends over the whole circumference of the annular disc.

6. Valve according to Claim 4, **characterized in that** the groove extends over only a portion of the circumference.

7. Valve according to one of Claims 1 to 3, **characterized in that** it comprises a degassing sphere (15) mounted mobile in an additional float chamber (17) and in the free central zone of the annular disc, so as to be able to move vertically between a low rest position and a high position in which it stops a degassing jet.
